# DEMANDE DE BREVET EUROPEEN

(11) **EP 0 575 236 A1**
(43) Date de publication de la demande: **22.12.1993**
(21) Numéro de dépôt: 93401520.7
(22) Date de dépôt: 14.06.1993
(51) Int. Cl.: G06F 15/20

(54) **Procédé de conversion de documents structurés du format ODA/ODIF au format RTF**

(30) Priorité: 15.06.1992 FR 9207209
(71) Demandeur: BULL S.A., F-92800 Puteaux (FR)
(72) Inventeur: Jacquet, Gérard, F-91120 Palaiseau (FR); Krawczyk, Didier, F-91230 Montgeron (FR); Thepaut, Serge, F-94270 Le Kremlin, Bicetre (FR); Smirnow, Claude, F-75010 Paris (FR)

(57) **Abrégé**

Ce procédé de conversion de documents structurés contenant du texte et des graphiques est mis en oeuvre par un module de conversion. Ce procédé est utilisé pour convertir des documents du type ODA dans un format ODA/ODIF en documents de format RTF. Il consiste en une discrimination des différents paragraphes par analyse des objets logiques avant conversion. Pour cela chaque paragraphe est défini comme une séquence d'objets basiques concaténés ayant la même classe d'architecture de contenu et, lorsqu'elle est spécifiée, la même catégorie de mise en page, un changement de classe opérant une rupture et donc débutant un nouveau paragraphe.

## Description

La présente invention concerne un procédé de conversion de documents structurés contenant du texte et des graphiques mis en oeuvre par un module de conversion traitant des documents composés d'objet logiques et d'objets de mise en page, documents du type ODA (Office Document Architecture, défini dans le norme ISO 8613) dans un format ODA/ODIF standard (ODIF : Office Document Interchange Format) et documents de traitement de texte codé du type du format RTF (Rich Text Format défini par Microsoft avec WORD for WINDOWS).

A l'origine et jusqu'à présent, un tel module de conversion devait mettre en oeuvre un même procédé dans les deux sens de conversion. L'expérience montre cependant que cette pratique est dangereuse, car un convertisseur est prévu pour analyser un flot de données entrantes de manière à le convertir dans un format donné et non pour décider quelle sorte de données entrantes peuvent être acceptées suivant ledit format donné.

En outre, le procédé de conversion doit, dans sa mise en oeuvre, permettre de tenir compte de la structure des documents du type ODA, en particulier de la structure des profils tels que Q111, Q112 et éventuellement Q113 (si cela est désiré). En effet, il est, par exemple, nécessaire de spécifier la manière dans laquelle un attribut d'un même objet de mise en page doit être converti, mais il faut de plus ne pas oublier que ce dernier n'est pas converti de la même manière selon qu'il s'applique à un objet de texte basique (non composite) ou à un paragraphe structuré. De plus, il est à remarquer qu'un paragraphe structuré d'un document ODA de profil Q112, par exemple, ne correspond pas nécessairement et systématiquement à un paragraphe de traitement de texte de format RTF. Cette remarque est d'importance car jusqu'à présent un paragraphe struturé ODA est représenté en vue d'être converti par une instance de classe de paragraphe RTF en langage C ++ de la même manière qu'un paragraphe de traitement de texte de type RTF. Ainsi, lors de la conversion d'un document ODA, la connaissance d'un paragraphe structuré de profil Q112 implique la création d'une instance de cette classe. Cet objet doit être converti en un paragraphe de type RTF ce qui nécessite une structure de données très lourde et donc génante.

La présente invention a pour but de remédier aux divers inconvénients de l'arc antérieur et propose un procédé de conversion de documents structurés mis en oeuvre par un module de conversior. qui permet de traiter des documents ODA de format ODA/ODIF et des documents de traitement de texte codé du type du format RTF de manière efficace et simple, c'est-à-dire sans nécessiter une structure de données lourde et délicate à manipuler.

Pour cela le procédé de conversion de documents structurés est remarquable en ce que pour la conversion des documents dans le sens format ODA/ODIF vers format RTF, il réalise une discrimination des paragraphes par analyse des objets logiques avant de les convertir ; chaque paragraphe étant pour cela défini comme une séquence d'objets basiques concaténés ayant la même classe d'architecture de contenu et la même catégorie de mise en page, lorsqu'elle est spécifiée, une rupture de mise en page, c'est-à-dire un changement de paragraphe se produisant alors, soit parce que le premier objet précise une non-concaténation, soit parce que l'objet hiérarchiquement supérieur précise un nouvel objet- de mise en page, une classe d'objet de mise en page ou une synchronisation.

Ainsi, les documents à convertir ne sont pas traités de la même manière selon le sens de conversion, l'invention revendiquée ne concernant que le sens format ODA/ODIF vers format RTF en définissant après analyse la conversion des différents objets ODA et en fournissant une nouvelle structure de données pour le module de conversion telle que la séquence d'objets ODA représente un paragraphe de traitement de texte. Grâce à cette structure de données un paragraphe ODA correspond à un paragraphe RTF tout en tenant compte du fait qu'un ensemble d'objets ODA peut avoir des relations de subordination ou d'arborescence. Il n'est plus nécessaire de réintroduire dans l'analyse du flot de données entrantes les propriétés du format cible, ce qui autorise l'utilisation d'un logiciel simple, de maintenance facile, et d'évolution souple lorsqu'il est désiré supporté une norme plus riche, par exemple, passage d'un profil ODA Q112 à un profil ODA Q113.

De même, de manière à autoriser la conversion de paragraphes synchronisés dans des colonnes parallèles des listes de paragraphes de catégories de mise en page différentes doivent être manipulées. Le module de conversion de documents dans le sens format ODA/ODIF vers format RTF doit être capable d'effectuer un réarrangement d'une séquence d'objets logiques à synchroniser. L'exemple simple suivant permet de mettre en évidence un autre inconvénient relatif à la structure de données suivante du module de conversion dans ce type d'analyse avant conversion de paragraphes synchronisés. Supposons qu'il soit désiré synchroniser une série de paragraphes en 3 colonnes (P_{1,1}, P_{1,2}, P_{1,3}) ; (P_{2,1}, P_{2,2}, P_{2,3}) ; (P_{3,1}, P_{3,2}, P_{3,3}) avec P_{1,1}, P_{2,1}, P_{3,1} synchronisés en admettant pour convention que dans un paragraphe Pᵢⱼ, i correspond à la ième colonne et j au jième paragraphe. Les paragraphes doivent être convertis et générés dans l'ordre cité ci-dessus (qui est l'ordre des rangées en format RTF) alors que l'ordre séquentiel logique permet d'autres arrangements plus avantageux et que le module de conversion mettant en oeuvre le procédé de conversion de l'art antérieur ne permet pas d'opérer de tels réarrangements puisqu'il ne fait pas la distinction entre l'analyse de la séquence d'objets logiques et la conversion.

Le procédé selon la présente invention permet de remédier également à cet autre inconvénient et est remarquable en ce que pour effectuer la conversion de paragraphes synchronisés dans des colones parallèles, une liste de paragraphes par catégorie de mise en page est tenue à jour, la fin d'une rangée étant déterminée lors de l'analyse par la reconnaissance, soit d'un paragraphe non synchronisé, soit d'un paragraphe synchronisé auquel s'applique un nouvel objet de mise en page et créant effectivement un objet de mise en page, soit de deux paragraphes synchronisés par l'attribut de synchronisation et qui ne sont pas l'un et l'autre au début d'une liste de paragraphes de catégorie de mise en page, une rangée étant constituée d'une pluralité de cellules de différentes catégories de mise en page alors qu'une cellule est définie par une séquence de paragraphes de même catégorie de mise en page dont le premier élément est, soit synchronisé, soit le premier paragraphe de ladite catégorie après, soit un paragraphe non synchronisé, soit une autre rangée, le module de conversion opérant un réarrangement de la séquence des cellules de paragraphes d'une rangée avant de la convertir en rangée de format RTF.

La description suivante en regard des dessins annexés, le tout donné à titre d'exemple non limitatif, fera bien comprendre comment l'invention peut être réalisée.
- La figure 1 propose un exemple de représentation de paragraphes structurés.
- La figure 2 offre un second exemple de représentation de paragraphes structurés.
- La figure 3 est un exemple de représentation de paragraphes multicolonnes.
- La figure 4 propose un exemple de synchronisation de paragraphes muticolonnes.

De manière générale, les différentes notions et définitions propres au vocabulaire spécifique utilisé dans la description sont contenues dans le document "ISO 8613-2".

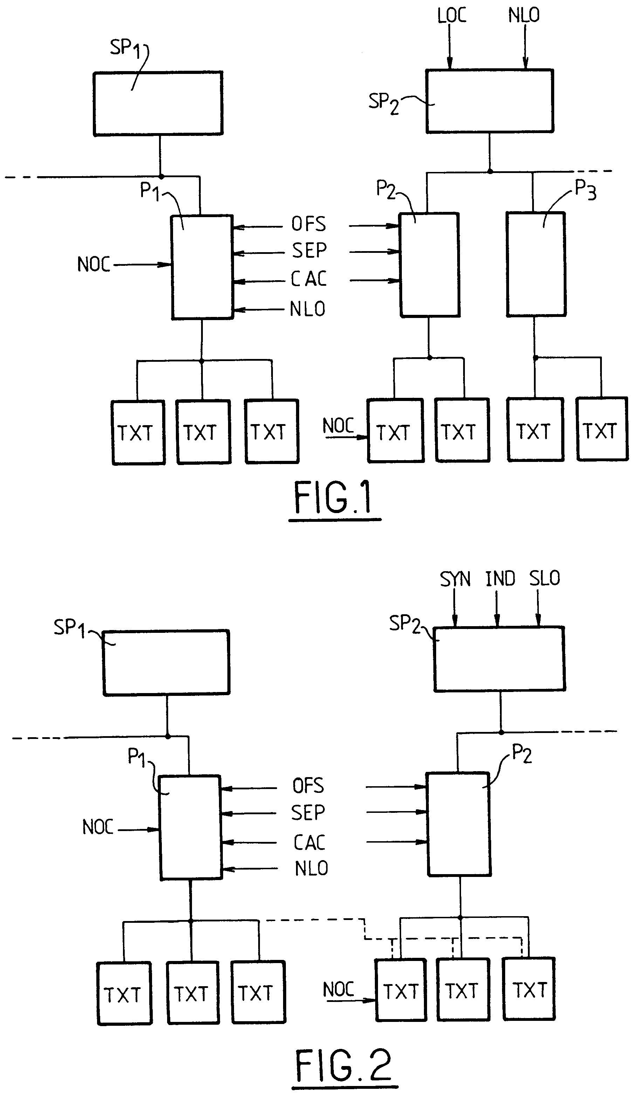

Sur la figure 1 est proposée un exemple de représentation de paragraphes structurés SP1, SP2,... Dans une première approche, seront considérés des paragraphes structurés et des objets basiques ne spécifiant aucune catégorie de mise en page correspondant donc à des documents mono-colonne dont les paragraphes doivent être mis en page selon une seule colonne. Les attributs et/ou directivés de mise en page qui s'appliquent à des objets basiques ou composites subordonnés à un paragraphe structuré peuvent introduire une rupture dans la mise en page du paragraphe structuré SP1, SP2... En particulier, si l'attribut "concaténation" s'applique à un objet basique en spécifiant une non-concaténation NOC au moins deux paragraphes RTF seront générés.

De manière similaire, un objet dont la classe d'architecture de contenu CAC est différente de celle de celui qui le précède ne peut pas être concaténé et constitue donc le début d'un nouveau paragraphe RTF.

Conformément à l'idée de l'invention un paragraphe P1, P2, P3,... représenté sur la figure est défini comme une séquence d'objets basiques concaténés de même classe d'architecture de contenu. Relativement à SP1, le premier objet basique spécifie ici une non-concaténation NOC mais peut également spécifier un nouvel objet de mise en page NLO, un décalage OFS, une séparation SEP ou on pourrait appartenir à une classe d'architecture de contenu CAC différente de celle de celui qui le précéde. C'est la raison pour laquelle il peut être dit que ces attributs s'appliquent au paragraphe.

Le paragraphe est constitué d'une séquence d'objets basiques représentant du texte TXT avec ou sans notes de bas de page, mais le premier objet peut tout aussi bien être un numéro, un objet basique relatif à un graphique structuré vectoriel ou un objet basique relatif à un graphique à correspondance de points. En outre, des objets basiques directement subordonnés à des parties de texte fractionnées en paragraphes numérotés définies sous l'appelation "segments numérotés" dans ODA (ci-après appelés fractionnements) peuvent être également groupés ensemble en paragraphes.

Le premier paragraphe du fractionnement contient alors un numéro. Une question se pose quant à la frontière délimitant les deux paragraphes structurés représentés sur la figure 1.

Deux cas peuvent se présenter puisque un paragraphe structuré peut introduire ou ne pas introduire une rupture de mise en page. En fait, le premier objet basique du second paragraphe structuré SP2 peut être concaténé et de même classe d'architecture de contenu que le dernier objet basique du paragraphe structuré SP1 le précédant. La première séquence d'objets basiques du second paragraphe structuré SP2 ne constitue pas alors réellement un paragraphe au sens où ce dernier a été défini.

Si le second paragraphe structuré SP2 introduit une nouvelle classe d'objet de mise en page LOC ou spécifie un nouvel objet de mise en page NLO, la première séquence constitue un paragraphe P2 séparé de P3, car une directive de mise en page applicable à des descriptions d'objets logiques hiérarchiquement plus élevées a priorité sur toutes les directives de mise en page applicables à des descriptions d'objet logique de niveaux moins élevés. Par conséquent, si SP2 introduit une nouvelle classe LOC ou spécifie un nouvel objet NLO, ses subordonnés appartiennent à un nouveau paragraphe P2 indépendamment de la classe d'architecture de contenu ou de la concaténation du premier subordonné. Egalement pendant l'analyse du paragraphe P2 lorsque est rencontré un nouvel objet de mise en page NLO, une nouvelle classe d'architecture de contenu CAC, ou une non-concaténation NOC une rupture est exécutée et un paragraphe P2 est ouvert.

Sur la figure 2 est présenté un second exemple d'analyse de paragraphes structurés SP1, SP2, l'analyse du paragraphe structuré SP1 étant considérée équivalente à celle du paragraphe SP1 de la figure 1 et la variante portant sur le paragraphe structuré SP2. Ainsi, si le paragraphe structuré SP2 ne spécifie ni une nouvelle classe d'objet de mise en page LOC, ni un nouvel objet de mise en page NLO il n'y a pas de rupture de mise en page et le dernier paragraphe P1 du paragraphe structuré SP1 précédent est continué avec la première séquence d'objets basiques du second paragraphe structuré SP2. Cette séquence alors ne constitue pas vraiment un paragraphe séparé (traits pointillés entre P1 et P2). Dans cette hypothèse, cependant, trois autres attributs peuvent s'appliquer au paragraphe structuré SP2 relativement à une synchronisation SYN, une indivisibilité IND ou un même objet de mise en page SLO ("Same Layout Object" dans ODA), c'est l'objet principal de la figure 2 et de sa description. Dans ce cas, si une synchronisation SYN est spécifiée et que le premier subordonré du paragraphe structuré SP2 spécifie une non-concaténation NOC, la directive de mise en page de l'objet hiérarchiquement le plus élevé est prioritaire et par conséquent la concaténation est ignorée. En fait l'attribut SYN spécifie que le bloc qui reçoit le contenu du premier subordonné et celui d'un autre composant logique spécifié doivent être alignés le long d'une ligne orthogonale à la direction du chemin de mise en page. Ainsi, l'attribut concaténation qui indique que l'objet basique doit être mis en page dans le même bloc que le contenu de l'objet basique précédent ne peut être observé, et comme pour une nouvelle classe LOC ou un nouvel objet NLO, l'attribut synchronisation SYN s'applique au paragraphe structuré SP2 en introduisant une rupture de mise en page et donc un nouveau paragraphe P2.

Concernant l'attribut indivisibilité IND, la norme ODA en particulier selon le profil Q112 est très large. Cela signifie ici que la dernière partie d'un paragraphe et une séquence d'un nombre donné de paragraphes suivants sont indivisibles, dans une page par exemple. Mais cette sorte d'indivisibilité qui est très large n'est pas supportée par le format RTF. Un repli doit être envisagé qui peut consister, pour la conversion de l'indivisibilité d'une séquence de paragraphes, en une spécification de l'indivisibilité pour chaque paragraphe pour les conserver chacun avec le suivant.

De manière similaire, la notion de même objet de mise en page SLO est très générale, signifiant ici que la dernière partie d'un paragraphe (la première séquence du second paragraphe structuré SP2) doit être mise en page dans le même objet que la première partie de paragraphe (qui est subordonné au paragraphe structuré précédant SP1). Ceci peut sembler étrange car l'attribut est applicable à un objet basique. La même chose peut aussi être spécifiée pour l'ensemble du paragraphe (tous les objets basiques) subordonné au paragraphe précédent et le même objet de mise en page s'appliquer à l'objet basique. Cependant l'indivisibilité IND décrite ci-avant ne pourrait alors être spécifiée.

La notion de paragraphe selon l'invention peut également être appliquée aux fractionnements, en particulier aux fractionnements définis suivant le profil Q112. Deux caractéristiques sont alors d'importance : le titre du fractionnement et la rupture de mise en page introduire par les fractionnements. Ainsi, une rupture de mise en page sera avantageusement introduite lorsque la première séquence d'objets basiques d'un fractionnement constituera un paragraphe, soit parce que le premier objet basique définit le début d'un paragraphe en spécifiant une nouvelle classe d'architecture de contenu CAC, un nouvel objet de mise en page NLO ou une directive de non-concaténation NOC, soit parce que le fractionnement spécifie un nouvel objet de mise en page NLO, une nouvelle classe d'objets de mise en page LOC ou une synchronisation SYN. Dans le cas contraire ni le fractionnement, ni l'objet constitué par le numéro n'introduit de rupture de mise en page. La première séquence d'objets basiques est alors la dernière partie du paragraphe précédent. Le fractionnement et le paragraphe structuré précédent sont ainsi mis en page de la même manière. Le titre du fractionnement, quant à lui, peut être constitué d'objets basiques directement subordonnés au fractionnement et suivre alors immédiatement le numéro. Mais il peut également suivre avec le paragraphe structuré suivant, le numéro restant alors seul devant, séparé du titre proprement dit, lorsque le paragraphe structuré ne spécifie ni une classe d'objets de mise en page, ni un nouvel objet de mise en page et que donc aucune rupture de mise en page n'est requise. Enfin, un titre de fractionnement peut être encore réduit à sa plus simple expression : le numéro.

Pour résumer, conformément à l'invention un paragraphe a été défini comme une séquence d'objets basiques de même classe d'architecture de contenu et de même catégorie de mise en page sachant que lorsque cette dernière n'est pas spécifiée par un objet, elle est considérée comme étant de la même catégorie de mise en page que l'objet basique précédent. Une rupture de mise en page est introduite par ladite séquence d'objets basiques, soit parce que le premier objet spécifie une non-concaténation, soit que l'objet hiérarchiquement supérieur (un paragraphe structuré, un fractionnement ou un chapitre) spécifie un nouvel objet de mise en page, une classe d'objet de mise en page ou une synchronisation. En outre, un fractionnement introduit toujours un paragraphe. Le premier paragraphe du fractionnement comporte le titre qui peut être réduit au seul numéro, le titre n'étant, en toute logique, jamais concaténé au paragraphe le précédant.

Le procédé permet également de traiter les multicolonnes serpentines. Les colonnes individuelles peuvent être de largeur et d'espacement égaux ou différents. Le générateur pour subordonnés d'un cadre de colonne serpentant peut fournir la liste des différents cadres variables pour chacune des colonnes individuelles. Dans ce cas, un repli est nécessaire car la partie colonnes serpentines dans RTF ne permet de traiter que des colonnes individuelles de même largeur et espacement. Pour pallier à cet inconvénient, il est proposé de considérer les moyennes des largeurs et des espacements des n cadres de colonnes variables comme valeurs uniques de largeur et d'espacement des colonnes individuelles RTF.

Le générateur pour subordonnés peut également ne pas spécifier le nombre de colonnes individuelles, ce qui implique alors de le calculer à partir de la dimension horizontale du cadre de colonnes serpentines ou du cadre principal et des position et dimension du cadre de colonne variable.

Des colonnes serpentines de largeur égale peuvent être souhaitées équilibrées dans leur longueur. Bien que les documents RTF ne comportent pas de colonnes serpentines équilibrées, il est possible d'utiliser un repli en tirant profit du fait qu'il est nécessaire d'équilibrer les multicolonnes serpentines lorsqu'une rupture continue d'une partie est provoquée. En fait, la rupture continue d'une partie implique la création d'une nouvelle partie commençant sur la même page. Si la partie serpentine a déjà rempli au moins une colonne, la nouvelle partie doit commencer à la page suivante à moins que les colonnes serpentines soient équilibrées de manière à dégager de la place dans la page. Ainsi, il est possible de créer une partie vide avec une rupture continue d'une partie après des paragraphes qui doivent être mis en page dans des colonnes serpentines. Cependant un tel équilibrage entraîne un grand nombre de difficultés de calcul et de conversion, pour cela il semble qu'il soit préférable de l'éviter.

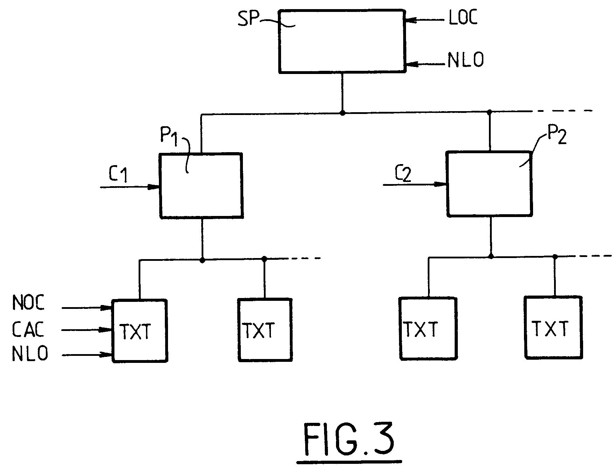

Sur la figure 3 un exemple de paragraphes multicolonnes est proposé. Dans ce type de paragraphes intervient la catégorie de mise en page qui s'applique aux objets basiques. Les objets basiques de différentes catégories de mise en page appartiennent à des paragraphes différents, cependant et conformément aux caractéristiques relatives au profil Q112 les objets basiques d'un paragraphe ne sont pas nécessairement adjacents.

Des paragraphes de même catégorie de mise en page sont arrangés dans l'ordre séquentiel logique, mais sans synchronisation il n'y pas d'ordre entre les paragraphes de catégories de mise en page différentes. Sur la figure 3, le paragraphe de catégorie de mise en page C1 est dessiné avant celui de catégorie de mise en page C2 parce que le premier objet basique dans l'ordre séquentiel logique est de catégorie C1 et qu'il est le premier à être reconnu. Mais cet arrangement n'est absolument pas obligatoire. Les deux catégories de mise en page C1, C2, sont indépendantes et l'ordre séquentiel logique ne doit pas imposer l'ordre de mise en page.

La synchronisation entre des objets logiques permet de spécifier des rangées de paragraphes, ou plus généralement des rangées de cellules, chaque cellule étant constituée d'une séquence de paragraphes dont seul le premier est synchronisé. Le module de conversion a pour tâche de réarranger la séquence de cellules de paragraphes d'une rangée avant de la convertir selon une rangée du type RTF.

Deux objets logiques de différentes catégories de mise en page, c'est-à-dire, qui doivent être mis en page dans différentes colonnes peuvent être synchronisés, soit par l'intermédiaire de l'attribut de "synchronisation" (c'est le premier cas), soit au moyen de la directive de "nouvel objet de mise en page" (c'est le second cas).

Dans le premier cas, relatif à une synchronisation de référence, le second objet dans l'ordre séquentiel logique fait référence au premier et spécifie que le contenu des deux objets doit être mis en page, aligné le long d'une ligne orthogonale à la direction de chemin de mise en page. Ceci implique que les deux objets ne soient pas concaténés. En réalité, la synchronisation est effectuée entre les blocs, les blocs des contenus devant être alignés. Si un objet est concaténé aucun bloc n'est créé par sa mise en page et rien ne doit être aligné car la concaténaticn a priorité sur la synchronisation.

Dans le second cas, relatif à la synchronisation d'un objet de mise en page, le premier objet dans l'ordre séquentiel logique spécifie un nouvel objet de mise en page. Cette directive indique que le contenu associé doit être mis en page au début d'un objet de mise en page qui ne contient aucun contenu précédent. Cet objet de mise en page doit être, si cela est nécessaire, créé. Par conséquent, la directive peut provoquer la mise en page de la séquence d'objets de différentes catégories de mise en page, pour recommencer au niveau d'une ligne orthogonale à la direction du chemin de mise en page. Leurs contenus sont alors implicitement alignés le long de cette ligne et ils sont par conséquent synchronisés.

Le procédé selon l'invention permet de traiter et d'exploiter ces deux cas de synchronisation de paragraphes.

La synchronisation de l'objet de mise en page est cependant plus simple, d'abord parce que seul un paragraphe (le premier dans l'ordre séquentiel logique) spécifie la synchronisation entre n paragraphes P1,...,Pn, avec Pi donnant la catégorie Ci de la ième colonne fixée. Dans le cas de la synchronisation de référence, par contre, (n-1) paragraphes spécifient ensemble la synchronisation en faisant référence à un autre paragraphe. En outre, dans la méthode de synchronisation de l'objet de mise en page, deux jeux de paragraphes synchronisés ne se chevauchent pas dans l'ordre séquentiel logique. La synchronisation de référence permet et requiert du module de conversion un réarrangement de paragraphes. Ainsi, si Q1,...Qn correspond à un autre jeu de paragraphes synchronisés du premier cas (synchronisation de référence), avec Qj de catégorie de mise en page Cj, une quelconque séquence logique de deux jeux de paragraphes est permise avec Pi < Qj (Pi < Qj, signifie que Pi précède Qj dans l'ordre séquentiel logique). Avec la synchronisation d'objet de mise en page, par contre Pi < Qj est obtenu pour i > = 1 et j < = n.

Dans la synchronisation d'objet de mise en page, un paragraphe Pk de catégorie de mise en page Ck, auquel un nouvel objet de mise en page s'applique est synchronisé avec le premier paragraphe de catégorie de mise en page Ci, avec i différent de k qui vient après. Les n paragraphes sont implicitement synchronisés alors que dans la synchronisation de référence (n-1) paragraphes font référence à un autre paragraphe.

Si une cellule correspond à une séquence de paragraphes de même catégorie de mise en page dont le premier paragraphe est synchronisé, une sous-séquence logique de paragraphes de la ième catégorie de mise en page, Pi1, Pi2,..., Pin est partagée en cellules par les paragraphes qui sont, soit implicitement, soit explicitement synchronisés et qui constituent le début de chaque cellule. La rangée correspond alors à un jeu de cellules C1, ..., Cn, avec Ci de ième catégorie de mise en page, les premiers paragraphes étant synchronisés ensemble.

Le module de conversion doit grouper ensemble les paragraphes d'une cellule et les cellules d'une rangée de manière à les convertir dans le format RTF.

Pour une meilleure appréhension de l'idée de l'invention suivent quelques précisions relatives aux deux méthodes de synchronisation citées ci-avant, qui permettront de mieux dégager la solution adoptée pour répondre aux problèmes de la synchronisation des paragraphes multicolonnes.

Dans la méthode de synchronisation d'un objet de mise en page, l'attribut "nouvel objet de mise en page" selon le profil Q112 peut être placé à toute valeur ODA autorisée. Si ledit attribut spécifie une classe de jeu de pages", "une classe de pages", une "classe de cadre de colonnes synchronisées ou une "page", un nouvel objet de mise en page est alors créé et implicitement les colonnes sont synchronisées.

Lorsqu'un nouvel objet de mise en page s'applique à un paragraphe, spécifiant une classe de cadre de colonnes déterminée ou sa catégorie de mise en page, un nouveau cadre de colonnes fixé est automatiquement créé si le cadre existant de même classe ou de même catégorie de mise en page a déjà reçu un contenu. Un nouveau cadre de colonnes synchronisées qui lui est hiérarchiquement supérieur est créé également de même que sont créés différents cadres de colonnes subordonnés. Ledit paragraphe sera synchronisé avec les paragraphes qui doivent être mis en page dans ces cadres de colonnes fixés.

Si à l'inverse, il existe un cadre vide de contenu et qu'un paragraphe spécifie un nouvel objet de mise en page avec, soit l'identificateur de la classe de cadres de colonnes fixée correspondant au dit cadre dans l'ordre du chemin de mise en page, soit sa catégorie de mise en page, alors le paragraphe est implicitement synchronisé. Si par contre, une synchronisation a déjà été préalablement imposée parce qu'un autre paragraphe a provoqué la création d'objets de mise en page, alors la valeur du nouvel objet de mise en page ne sera pas prise en compte du fait de la redondance.

Ainsi le module de conversion doit conserver et mettre à jour une liste de paragraphes par catégorie de mise en page.

Lorsqu'un nouvel objet de mise en page s'applique à un paragraphe avec une valeur différente de la valeur "nulle", et si la liste de cette catégorie n'est pas vide, alors le paragraphe introduit une rangée et une cellule nouvelle. Le module de conversion peut ensuite convertir la rangée précédente comportant des cellules synchronisées. Dans le cas contraire, le paragraphe constitue le premier paragraphe (synchronisé) de sa cellule.

A présent, avec la méthode de synchronisation de référence, considérons les catégories de mise en page C1, C2,... Cn de n colonnes parallèles dans cet ordre conformément au chemin de mise en page, les paragraphes P1, P2,..., Pn étant les n paragraphes synchronisés d'une rangée avec Pi de catégorie de mise en page Ci. Dans ce cas, la séquence logique la plus naturelle est P1, P2,..., Pn, s'adaptant parfaitement à la mise en page, les paragraphes étant alors adjacents. Cependant la norme ODA selon le profil Q112 permet un quelconque arrangement non seulement pour une rangée, mais également pour différentes rangées. Ainsi, en considérant m paragraphes synchronisés Q1, Q2, ..., Qm d'une autre rangée, avec Qj de catégorie de mise en page Cj, toute séquence logique de ces deux jeux de paragraphes est permise, avec la restriction Pi < Qj. Les paragraphes de la seconde rangée peuvent apparaître dans la séquence logique avant la fin de la première rangée. Une seconde restriction vient de ce que le premier paragraphe détermine quelle rangée doit être mise en page en premier lieu. Cependant, dans le format RTF, les cellules d'une rangée sont adjacentes et suivent l'ordre du chemin de mise en page. Par conséquent, le module de conversion doit reconnaître les différentes cellules de manière à les réarranger et les convertir selon les rangées du format RTF : (P1, P2, ...,Pn), (Q1, Q2,..., Qm).

La principale conséquence due à la permissivité de la norme ODA en profil Q112 est que le nombre de colonnes ne peut être connu avant que le document logique spécifique n'ait été lu dans son intégralité, la séquence suivante pouvant ainsi survenir : (P1, P2,...,Pn), (Q1, Q2,..., Qm),..., (T1, T2,...,Tp),...,Pn+1. L'objet de cette analyse est de déterminer les arrangements de rangées les plus naturels. Une question se pose néanmoins : le module de conversion doit-il tenir compte de la synchronisation générale de l'ensemble des paragraphes ou seulement d'une partie de ceux-ci. Une première étape permet d'analyser un exemple de synchronisation entre paragraphes structurés d'une même catégorie de mise en page. Chaque paragraphe structuré regroupe ensemble une pluralité de paragraphes de même catégorie de mise en page, c'est-à-dire qui doivent être mis en page dans une colonne déterminée, et chaque paragraphe structuré constitue une cellule d'une rangée. Le premier paragraphe de chaque cellule est synchronisé avec les premiers paragraphes des cellules des autres colonnes. Un tel arrangement fait apparaître une structure plus élaborée. Deux attributs peuvent être appliqués au paragraphe structuré, c'est-à-dire à la cellule : "l'indivisibilité" et le "même objet de mise en page".

La directive de mise en page faisant appel à l'indivisibilité d'une cellule est équivalente à celle décrite lors de l'analyse de paragraphe structuré mono-colonne, les mêmes replis s'appliquant également.

L'attribut "même objet de mise en page" implique une liaison avec le paragraphe structuré précédent. L'utilisation de cet attribut n'a plus de sens si il n'est pas appliqué au premier paragraphe structuré.

Ici encore, il n'y a pas d'exigence selon la norme ODA de profil Q112 qui implique que les paragraphes structurés soient arrangés dans l'ordre du chemin de mise en page. Si, SP1, SP2,...,SPn, sont n cellules d'une rangée dans l'ordre séquentiel logique, SPi n'est pas nécessairement de catégorie de mise en page Ci, de la ième colonne dans l'ordre du chemin de mise en page. De même que les paragraphes structurés SPi, la seconde rangée de cellules de paragraphes structurés, SQ1, SQ2, ...,SQn, peut apparaître avant la fin de la rangée précédente. Tout arrangement est permis pourvu que SPi < SQj.

Il est à remarquer qu'il n'y a aucun moyen de savoir si une structure logique contient la rangée synchronisée. C'est seulement lorsque l'intégralité du paragraphe structuré a été reconnue que le module de conversion peut constater qu'il a affaire à un groupe de paragraphes d'une seule catégorie de mise en page. Il n'est pas possible de déterminer le nombre de colonnes avant que le document n'ait été lu dans son entier. Il est à noter et à tenir compte également du fait qu'un paragraphe peut se poursuivre sur le prochain paragraphe structuré.

Une seconde étape permet d'analyser un exemple de synchronisation entre les paragraphes d'un paragraphe structuré. Dans cet exemple, une pluralité de paragraphes structurés constitue une rangée complète, c'est-à-dire que toutes les cellules d'une rangée sont regroupées ensemble. Chaque paragraphe structuré regroupe ensemble une pluralité de cellules de la même rangée, qui doivent être mises en page à partir d'une ligne orthogonale au chemin de mise en page. Les cellules de la rangée doivent être réarrangées, étant donné que tout arrangement est possible pourvu que Pi1 < ... < Pij < ... < Pix, où Pij est le jème paragraphe de la cellule de catégorie de mise en page i, x étant le dernier paragraphe. Comme précédemment, les attributs applicables au paragraphe structuré, c'est-à-dire à la rangée concernent "l'indivisibilité" et le "même objet de mise en page".

L'indivisibilité d'une rangée a des propriétés identiques à celles de la directive décrites lors de l'analyse de paragraphe structuré mono-colonne, les mêmes replis s'appliquant également.

L'attribut "même objet de mise en page" implique une liaison avec la rangée précédente. Dans cette analyse, il n'y a pas non plus de moyen de savoir si cette structure logique contient la rangée synchronisée. Il faut de même tenir compte du fait qu'un paragraphe peut se poursuivre sur le prochain paragraphe structuré.

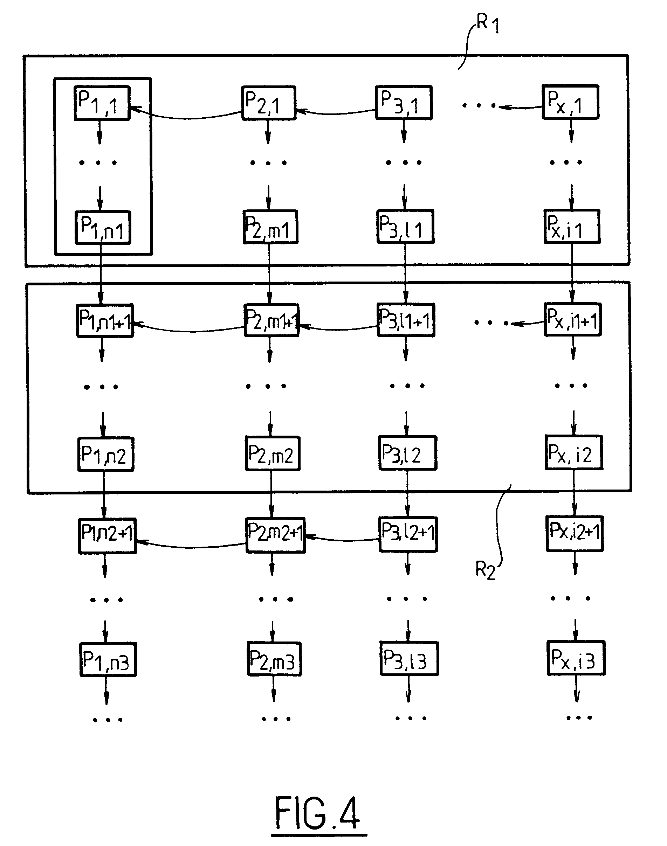

Une troisième étape permet d'analyser, à l'aide de la figure 4, la notion de synchronisation de référence généralisée. Les paragraphes d'une cellule, de même que les cellules d'une rangée ne doivent pas nécessairement être regroupés dans un paragraphe structuré. La synchronisation entre des paragraphes appartenant à différents paragraphes structurés et/ou fractionnements doit être organisée. Le module de conversion doit tenir à jour des listes de paragraphes de même catégorie de mise en page comme cela est montré sur la figure 4. La synchronisation permet de déterminer le début d'une cellule, chaque paragraphe qui y fait référence ou qui s'y réfère par synchronisation constitue le début d'une cellule. L'ensemble des paragraphes non synchronisés de même catégorie de mise en page qui viennent à la suite appartiennent à la même cellule. De manière à déterminer le dernier paragraphe d'une cellule le module de conversion doit reconnaître le début de la prochaine cellule, c'est-à-dire un autre paragraphe synchronisé de même catégorie de mise en page.

Ainsi de manière préférée une rangée peut être générée lorsque le premier paragraphe de chaque cellule de la rangée suivante est reconnu. Par exemple sur la figure 4, la rangée R1 : [(P_{1,1},..., P_{1,n1}), (P_{2,1},... , P_{2,m1}), ..., (P_{x,1},..., P_{x,i1})] sera générée lorsque P_{1,n1+1}, P₂, ₘ₁₊₁, ..., P_{x,i1+1}, seront reconnus comme des premiers paragraphes synchronisés de la rangée R2. Avantageusement, la reconnaissance du premier paragraphe synchronisé de la seconde rangée R2 est suffisante pour clore la première rangée.

Une cellule peut, en outre, être vide. Supposons que la troisième cellule de la première rangée est vide. Le module de conversion va décider de générer une cellule vide lorsqu'il reconnait le paragraphe P_{3,11+1} et détermine qu'il est synchronisé avec un paragraphe qui n'appartient pas au jeu de paragraphes synchronisés de la rangée R1. Plus précisemment, si (P_{i,1},... P_{k,1}) est le jeu de paragraphes synchronisés de la rangée R1 qui précède P_{3,11+1} dans l'ordre séquentiel logique, il est suffisant de déterminer que P_{3, 11+1} est synchronisé avec un paragraphe qui n'appartient pas à ce jeu.

Un paragraphe et sa cellule de la rangée courante, c'est-à-dire de la prochaine rangée à convertir peut être avantageusement synchronisé par la synchronisation de référence de la cellule suivante de même catégorie de mise en page. Sur la figure, la cellule (P_{3,1},..., P_{3,11}) est synchronisée avec la cellule (P_{1,1},... P_{1,n1})... (P_{x,1},..., P_{x,i1}), bien que le paragraphe P_{3,1} ne fait pas référence à un autre paragraphe ou n'est pas désigné par synchronisation puisque le paragraphe P_{3,11+1} appartient à un autre jeu, différent du jeu de paragraphes synchronisés de la rangée courante. Une question se pose ici, pour déterminer quand la cellule (P_{3,1},... P_{3,11}) appartient à la rangée courante plutôt qu'à celle qui la précède. La réponse est la suivante. Si les paragraphes qui précèdent la rangée courante doivent être mis en page, soit dans un cadre de colonne simple, soit dans un cadre de colonnes serpentines, alors il est certain que la cellule appartient à cette rangée puisque un cadre de colonnes synchronisées doit être créé et que le paragraphe P_{3,1} qui doit être mis en page dans ce cadre, sera aligné le long de sa première ligne. Si les paragraphes précédents appartiennent à une autre rangée, dans ce cas pour être conforme aux exigences de la norme ODA, la cellule (P_{3,1}..., P_{3,11}) devrait être considérée appartenir à la rangée précédente. Mais alors, les paragraphes de cette rangée ne seraient pas adjacents et si un tel arrangement de rangées était permis, le module de conversion devrait lire tout le document pour détecter la fin de la rangée. La norme ODA profil Q112 permet par exemple, de spécifier après tous les paragraphes de la figure 4 (dans l'ordre séquentiel logique) un autre paragraphe d'une autre catégorie de mise en page supplémentaire synchronisé avec le paragraphe P_{x,1}. Cependant bien que la norme ODA profil Q112 ne l'impose pas, selon l'invention tous les paragraphes d'une rangée doivent être adjacents, car ce choix permet, tout en conservant une qualité élevée de conversion, d'améliorer les performances dans le temps. Une mise en oeuvre du procédé qui permettrait d'accepter tout arrangement de rangées doit être écartée, car cela imposerait une lecture complète du document logique spécifique, du paragraphe courant jusqu'à la fin du document pour chaque rangée.

Par conséquent, les paragraphes de la première rangée doivent précéder dans l'ordre séquentiel logique les paragraphes de la prochaine rangée. Il est alors possible de spécifier comment est détectée la frontière entre deux jeux de paragraphes explicitement synchronisés : la rangée courante peut être fermée et convertie lorsqu'est produit une synchronisation entre deux paragraphes qui ne se trouvent pas, l'un et l'autre, au début de leur liste respective de catégorie de mise en page.

Un paragraphe Pi,j qui ne se trouve pas au début de sa liste de catégorie de mise en page qui fait référence à un autre paragraphe P_{m,n}, avec n différent de i, ferme la rangée courante. En réalité, P_{2,m1+1}, n'est pas le premier paragraphe de sa liste de catégorie de mise en page et il fait référence à P_{1,n1+1} il commence une nouvelle rangée puisqu'il ne peut être ajouté à la cellule courante de la seconde catégorie de mise en page et qu'aucun autre paragraphe ne sera accepté dans la rangée courante.

De la même manière, un paragraphe P_{i,j} qui peut être le premier de la ième liste de catégorie de mise en page et qui fait référence à un paragraphe P_{m,n} qui ne se situe pas au début de sa liste de catégorie de mise en page, définit une nouvelle cellule pour la nième catégorie de mise en page. De même, aucun autre paragraphe ne sera accepté dans la rangée courante.

Il est à noter que le second paragraphe, Pm,n qui est celui auquel se réfère l'attribut de synchronisation ne peut être adjacent au premier paragraphe connu de la nouvelle rangée Pi,j. Le paragraphe Pm,n, peut être accepté dans la nouvelle rangée car il a été décidé de prendre en compte des rangées de paragraphes adjacents de manière à éviter la lecture du document logique spécifique jusqu'à la fin, chaque fois qu'une rangée doit être convertie. Dans ce cas, P_{m,n}, est connu sans aucune lecture et il est possible alors de l'accepter.

Une autre question se pose relativement à l'appartenance des cellules non synchronisées. A quelle rangée appartiennent-elles lorsque le paragraphe terminant la rangée apparaît ? Imaginons sur la figure 4 que les paragraphes (P_{x,1},..., P_{x,i1}) de la xième catégorie de mise en page ne sont synchronisés avec aucun autre paragraphe. Ils peuvent être adjacents, soit aux paragraphes de la rangée courante, soit à ceux de la nouvelle rangée P_{1, n1+1}, et P_{2, m1+1}, soit encore aux deux jeux de paragraphes. Le problème est que le paragraphe suivant d'une autre catégorie de mise en page, par exemple la troisième, peut faire référence à un paragraphe de cette cellule adjacente à la nouvelle rangée.

Il est également possible d'imaginer que les paragraphes P₂, ₘ₁₊₁ et P₃, ₁₁₊₁, ne se trouvent pas sur la première ligne de la rangée R₂ (décalage dans la mise en page des paragraphes vers le bas). Si, par exemple, P_{3, 11+1} fait référence à l'un des paragraphes (P_{x,1},... P_{x,i1}) non synchronisés, une telle synchronisation doit être ignorée, car dans ce cas, les paragraphes de la nouvelle rangée ne sont plus adjacents et il n'est pas désiré réaliser un traitement supplémentaire pour regrouper ensemble tous les paragraphes non adjacents d'une rangée. Par contre si P₂, ₙ₁₊₁ fait référence à P₁, ₙ₁₊₁, cette synchronisation est prise en compte, bien que des paragraphes de la rangée courante puissent se trouver entre eux deux, parce qu'elle permet de reconnaître le début de la nouvelle rangée. Pour répondre et traiter ces derniers problèmes une sous-séquence logique de conversion est prévue, et pour rendre ce traitement plus simple l'ordre des objets référencés par la synchronisation doit être le même que celui des objets se référant à la synchronisation. Si un tel ordre est respecté, il est possible de décider d'inclure dans la rangée courante tous les paragraphes des cellules non synchronisées qui précède les objets de fermeture de la rangée courante parce qu'il est alors certain que le premier paragraphe référencé par la synchronisation dans l'ordre séquentiel logique est le premier de la nouvelle rangée.

Au travers de l'analyse des différents exemples de synchronisation, il a été établi deux contraintes qui peuvent limiter le jeu d'entrée de paragraphes synchronisés :
- les paragraphes d'une rangée doivent être adjacents
- la sous-séquence logique des paragraphes référencés par la synchronisation et la sous-séquence logique des paragraphes se référant à la synchronisation doivent être isomorphes.
   Une phase de synchronisation générale peut être ainsi explicitée. Un paragraphe auquel s'applique un nouvel objet de mise en page et qui crée l'objet de mise en page, ferme la rangée courante de la même manière que le font les paragraphes de fermeture explicitement synchronisés. Mais la synchronisation de l'objet de mise en page est ici encore plus simple car il n'est pas nécessaire de faire une quelconque supposition relativement à l'arrangement de paragraphe d'une rangée et des paragraphes de deux rangées adjacentes. Il est connu que tous les paragraphes qui précèdent dans l'ordre séquentiel logique le paragraphe de fermeture appartiennent à la rangée courante.
   De manière avantageuse la synchronisation de l'objet de mise en page et la synchronisation de référence peuvent être utilisées dans le même document. Le module de conversion doit tenir à jour une liste de paragraphes par catégorie de mise en page qui appartiennent à la même rangée. L'intégralité de la rangée peut être convertie lorsqu'un paragraphe de fermeture est reconnu, un tel paragraphe est, soit :
- un paragraphe qui doit être mis en page dans un cadre simple,
- un paragraphe qui doit être mis en page dans un cadre multicolonnes serpentines,
- un paragraphe auquel s'applique un nouvel objet de mise en page et qui est le premier de sa liste de catégorie de mise en page,
- un paragraphe qui spécifie une synchronisation et les deux paragraphes synchronisés ne sont pas, l'un et l'autre, le début de leur liste respective de catégorie de mise en page.

Dans un document, de manière générale, il n'est pas rare de trouver en alternance des colonnes simples, des paragraphes en colonnes serpentines et des paragraphes en colonnes synchronisées. En fait, une rangée de paragraphes peut être fermée dès la reconnaissance du paragraphe de fermeture. Une telle alternance dans un chapitre comportant des paragraphes synchronisés et non synchronisés ne pose pas de problème de conversion puisque dans la partie RTF, la même chose est possible. De manière similaire, la partie RTF permet de définir différents jeux de colonnes synchronisées tout comme dans un chapitre selon la norme ODA en profil Q112.

Dans le même chapitre, il est possible de trouver également des paragraphes qui doivent être mis en page dans différents cadres simples et/ou différents cadres de colonnes serpentines. Mais cela n'est pas possible dans la partie RTF qui permet de traiter, soit un cadre simple, soit un cadre de colonnes serpentines pour les paragraphes non synchronisés.

Des cadres qui doivent recevoir le contenu de paragraphes non synchronisés seront appelés cadres non synchronisés. Le premier paragraphe non synchronisé d'un chapitre définit le cadre non synchronisé de toute la partie RTF. Un changement de cadre non synchronisé ultérieur nécessite une rupture dans la partie RTF pour pouvoir le convertir. Une telle rupture dans la partie RTF ne permet pas de prendre en compte les autres caractéristiques de ladite partie. Par conséquent, toutes les caractéristiques du chapitre doivent être converties avant ou lorsque le premier paragraphe non synchronisé d'un chapitre est rencontré. De cette façon toute modification ultérieure d'un cadre non synchronisé fait appel à une nouvelle rupture de la partie RTF avec simplement une nouvelle définition du cadre non synchronisé.

Pour chaque paragraphe non synchronisé (de même que pour une rangée), le module de conversion doit contrôler son cadre : selon sa catégorie de mise en page il devrait chercher un cadre simple ou un cadre variable dans le générateur de subordonnés du cadre principal avec lequel les listes de catégories permises concordent. Mais, comme dans le procédé il n'est pas désiré traiter le générateur de subordonnés, une fonction sera prévue dans l'interface entre ODA et RTF (ladite interface extérieure au module de conversion étant située du côté RTF). Cette fonction doit permettre d'associer à une catégorie de mise en page, soit un cadre simple, soit un cadre de colonnes serpentines avec la liste de ses cadres variables subordonnés.

De manière équivalente, lors de la conversion d'une rangée de n cellules, un cadre de colonnes synchronisées doit être trouvé dans le cadre principal du chapitre courant dont la liste des cadres de colonnes déterminées contient des listes de catégorie de mise en page permises qui correspondent aux n catégories de mise en page. L'interface entre ODA et RTF doit donc également présenter la fonction qui associe à une liste de n catégories de mise en page, un cadre de colonnes synchronisés et la liste de n cadres de colonnes subordonnées fixées dont la liste de catégories permises concordent avec les n catégories de mise en page. Ceci amène à une navigation dans la structure de mise en page générique. Pour la fonction précédente, des cadres doivent être cherchés dans le cadre principal. La norme ODA profil Q112 autorise différents cadres principaux pour différentes classes de page dans le même chapitre. Une navigation parallèle de la structure de mise en page générique et de la structure logique spécifique est souhaitable. Pour l'objet logique courant ainsi l'interface entre ODA et RTF doit permettre de présenter le jeu de page courant, la page, le cadre principal...

Pour conclure, le procédé de conversion de documents structurés spécifique à la conversion de documents dans le sens format ODA/ODIF vers format RTF permet de faire avantageusement correspondre un paragraphe du type ODA à un paragraphe du type RTF. En effet un paragraphe structuré est analysé avant conversion, l'analyse permettant de discriminer des paragraphes suivant une structure de données définie telle qu'elle corresponde à la structure des paragraphes de type RTF. L'utilisation du procédé devient significativement simple, rend la maintenance aisée et permet une évolution souple et facile lorsqu'il est désiré supporté une norme plus riche. De même, la conversion de paragraphes synchronisés selon un réarrangement utilisant avantageusement l'ordre séquentiel logique est aisée et efficace. En outre, le procédé permet de traiter sans difficulté une alternance de colonnes simples, de paragraphes en colonnes serpentines et de paragraphes en colonnes synchronisées.

## Revendications

1. Procédé de conversion de documents structurés contenant du texte et des graphiques mis en oeuvre par un module de conversion traitant des documents composés d'objets logiques et d'objets de mise en page, documents du type ODA dans un format ODA/ODIF et documents de traitement de texte codé du type du format RTF, caractérisé en ce que pour la conversion de documents dans le sens format ODA/ODIF vers format RTF, il réalise une discrimination de paragraphes par analyse des objets logiques avant de les convertir, chaque paragraphe étant pour cela défini comme une séquence d'objets basiques concaténés ayant la même classe d'architecture de contenu et la même catégorie de mise en page lorsqu'elle est spécifiée, une rupture de mise en page, c'est-à-dire une changement de paragraphe se produisant alors soit parce que le premier objet précise un non-concaténation, soit parce que l'objet hiérarchiquement supérieur précise un nouvel objet de mise en page, une classe d'objet de mise en page ou une synchronisation.

2. Procédé de conversion de documents structurés, caractérisé en ce que lors de l'analyse de parties de texte fractionnées en paragraphes numérotés appelées fractionnements, la première séquence d'objets basiques d'un fractionnement constitue un paragraphe selon la revendication 1 soit parce que le premier objet basique définit le début d'un paragraphe en spécifiant une nouvelle classe d'architecture de contenu, un nouvel objet de mise en page ou une directive de non-concaténation, soit parce que le fractionnement spécifie un nouvel objet de mise en page, une nouvelle classe d'objets de mise en page ou une synchronisation.

3. Procédé de conversion de documents structurés selon la revendication 1 ou 2, caractérisé en ce que pour effectuer la conversion de paragraphes synchronisés dans des colonnes parallèles, une liste de paragraphes par catégorie de mise en page est tenue à jour, la fin d'une rangée étant déterminée lors de l'analyse par la reconnaissance, soit d'un paragraphe non synchronisé, soit d'un paragraphe synchronisé auquel s'applique un nouvel objet de mise en page et créant effectivement un objet de mise en page, soit de deux paragraphes synchronisés par l'attribut de synchronisation et qui ne sont pas, l'un comme l'autre, au début d'une liste de paragraphes de catégorie de mise en page, une rangée étant constituée d'une pluralité de cellules de différentes catégories de mise en page alors qu'une cellule est définie par une séquence de paragraphes de même catégorie de mise en page dont le premier élément est soit synchronisé, soit le premier paragraphe de ladite catégorie après, soit un paragraphe non synchronisé, soit une autre rangée, le module de conversion opérant un réarrangement de la séquence des cellules de paragraphes d'une rangée avant de la convertir en rangée de format RTF.

4. Procédé de conversion de documents structurés selon la revendication 3 caractérisé en ce que les listes de paragraphes de catégories de mise en page qui appartiennent à la rangée courante sont en outre tenues à jour, l'ensemble de ladite rangée courante étant converti lorsqu'est reconnu un paragraphe de fermeture tel que :
- un paragraphe non synchronisé, qui est, soit un paragraphe à mettre en page dans un cadre simple, soit un paragraphe à mettre en page dans un cadre multicolonnes serpentines,
- un paragraphe auquel un nouvel objet de mise en page s'applique qui est le premier de sa liste de catégorie de mise en page,
- un paragraphe qui spécifie une synchronisation et les deux paragraphes synchronisés ne sont pas, l'un et l'autre, le début de leur liste de catégorie de mise en page respective.

5. Procédé de conversion de documents structurés selon la revendication 4, caractérisé en ce que la génération d'une rangée est opérée lorsque le premier paragraphe de chaque cellule de la rangée suivante est reconnu lors de l'analyse, la reconnaissance du premier paragraphe synchronisé de la rangée suivante opérant la fermeture de la rangée précédente.

6. Procédé de conversion de documents structurés selon la revendication 5, caractérisé en ce que un paragraphe et sa cellule de la rangée courante, c'est-à-dire de la prochaine rangée à convertir est synchronisé par la synchronisation de référence de la cellule suivante de même catégorie de mise en page.

7. Procédé de conversion de documents structurés selon l'une des revendications précédentes, caractérisé en ce que pour la mise en oeuvre de la synchronisation de paragraphes un réarrangement est opéré de telle manière que :
- les paragraphes d'une rangée soient adjacents,
- la sous-séquence logique des paragraphes référencés par la synchronisation et la sous-séquence logique des paragraphes se référant à la synchronisation soient isomorphes c'est-à-dire que la sous-séquence logique des objets référencés par la synchronisation soit ordonnée de la même manière que la sous-séquence logique des objets se référant à la synchronisation.

8. Procédé de conversion de documents structurés selon l'une des revendications précédentes, caractérisé en ce que dans un chapitre d'un document comportant des paragraphes synchronisés et des paragraphes non synchronisés, le contenu, des paragraphes non synchronisés étant appelé un cadre non synchronisé, le premier paragraphe non synchronisé du chapitre définit le cadre non synchronisé de toute la partie RTF, un changement de cadre non synchronisé ultérieur nécessitant une rupture dans la partie RTF avant conversion.
